# EUROPÄISCHE PATENTSCHRIFT

(11) **EP 3 643 448 B1**
(45) Veröffentlichungstag und Bekanntmachung des Hinweises auf die Patenterteilung: **01.07.2026**
(21) Anmeldenummer: 19203877.6
(22) Anmeldetag: 17.10.2019
(51) Int. Cl.: B24B 41/06, B23B 31/30, B24B 5/307, B24B 5/37, B24B 5/22, B24B 19/06, B24B 5/18

(54) **MASCHINE UND VERFAHREN ZUM SCHLEIFEN DÜNNWANDIGER WERKSTÜCKE**
MACHINE AND METHOD FOR GRINDING THIN-WALLED WORKPIECES
MACHINE ET PROCÉDÉ DE MEULAGE DE PIÈCES À PAROIS MINCES

(30) Priorität: 22.10.2018 DE 102018126260
(43) Veröffentlichungstag der Anmeldung: 29.04.2020
(73) Patentinhaber: Fritz Studer AG, 3612 Steffisburg (CH)
(72) Erfinder: Hirschi, Jan, 3506 Grosshöchstetten (CH); Mathys, Marco, 3638 Blumenstein (CH); Krähenbühl, Didier, 3604 Thun (CH)
(74) Vertreter: Arend, Christa

(56) Entgegenhaltungen:
- DE-C1- 4 120 338
- DE-T5- 112015 005 458
- JP-B2- 3 991 648
- US-A- 2 444 531
- US-A- 4 183 545
- US-A- 5 423 716

## Beschreibung

Die vorliegende Offenbarung betrifft eine Maschine zum Schleifen dünnwandiger Werkstücke, insbesondere mittels Schuhschleifen. Mit anderen Worten bezieht sich die vorliegende Offenbarung zumindest in beispielhaften Ausführungsformen auf Schuhschleifmaschinen. Ferner betrifft die vorliegende Offenbarung ein korrespondierendes Verfahren zum Schleifen dünnwandiger Werkstücke. Folglich bezieht sich die vorliegende Offenbarung auf Schuhschleifverfahren. Ferner bezieht sich die vorliegende Offenbarung auf vorteilhafte Verwendungen von Rundschleifmaschinen, die zum Schuhschleifen ausgebildet sind.

Schuhschleifverfahren und hierfür geeignete Schleifmaschinen sind beispielsweise aus der US 6,287,183 B1 oder der DE 41 20 338 C1 bekannt. Aus der JP 3991648 B2 ist eine Maschine zum Schuhschleifen bekannt, die einen Werkstückhalter mit einem Magnetfutter umfasst, wobei das Magnetfutter zwölf Magnetbacken aufweist, die kreisförmig verteilt am Umfang des Magnetfutters angeordnet sind und die jeweils radial verfahrbar sind, um ein ringförmiges Werkstück von innen zu greifen und festzuhalten. Das Werkstück wird mittels Magnetkraft gehalten.

Beim Schuhschleifen handelt es sich um ein spezifisches Schleifverfahren. Beim Schuhschleifen ist das zu bearbeitende Werkstück nicht fest (konzentrisch) zwischen zwei Spitzen aufgenommen. Insofern ähnelt das Schuhschleifen dem üblichen spitzenlosen Schleifen. Jedoch ist das Werkstück regelmäßig an einer Stirnseite an einer Werkstückaufnahme befestigt.

Das Schuhschleifen hat sich insbesondere für die Bearbeitung von dünnen ringartigen Werkstücken als vorteilhaft erwiesen. Typische Werkstücke, die mittels Schuhschleifen hergestellt und/oder bearbeitet werden, sind Lagerringe.

Beim konventionellen Schuhschleifen werden die Werkstücke beispielsweise über ein sogenanntes Magnetspannfutter an der Werkstückaufnahme gehalten. Das Magnetspannfutter hält das Werkstück über Magnetkräfte. Die Werkstückspindel mit dem Magnetspannfutter ist rotierbar und über einen Drehantrieb antreibbar. Jedoch ist das Werkstück mit seiner Längsachse exzentrisch zur Längsachse der Werkstückspindel bzw. des Magnetspannfutters angeordnet.

Demgemäß müsste das Werkstück exzentrisch umlaufen, wenn die Werkstückspindel rotiert. Jedoch ist das Werkstück ferner über sogenannte Schuhe gehalten, also über Abstützelemente, die das Werkstück bewusst in seiner exzentrischen Position halten. Mit anderen Worten soll sich nach Möglichkeit beim Schuhschleifen das Werkstück nicht (radial) bewegen. Dies schließt jedoch nicht aus, dass sich aufgrund der "schwimmenden" Anordnung des Werkstücks bei einer Durchmesserverringerung durch den Auftrag eine neue Position des Werkstücks und folglich eine neue Position der Längsachse des Werkstücks ergibt.

Diese Konstellation bedingt jedoch eine Relativbewegung zwischen dem Werkstück und einer Anlagefläche am Magnetspannfutter, wenn die Werkstückspindel angetrieben wird. Die Schleifscheibe ist regelmäßig parallel zum Werkstück beziehungsweise zur Werkstückspindel ausgerichtet. Es ist jedoch auch eine geneigte Orientierung vorstellbar. Bei der Bearbeitung rotiert die Schleifscheibe.

Das Schuhschleifen kann ein Außenschleifen/Außenrundschleifen und/oder ein Innenschleifen/Innenrundschleifen des Werkstücks umfassen. Beim Außenschleifen weisen die Schleifscheibe und das Werkstück regelmäßig gegensinnige Drehrichtungen auf. Beim Innenschleifen weisen die Schleifscheibe und das Werkstück regelmäßig gleichsinnige Drehrichtungen auf. Dies ist jedoch nicht einschränkend zu verstehen. Beim Innenschleifen können zum Beispiel auch gegensinnige Drehrichtungen von Schleifscheibe und Werkstück gegeben sein.

Das Schuhschleifen ermöglicht gerade bei dünnwandigen, ringförmigen Werkstücken eine ausgezeichnete Maßhaltigkeit und Oberflächenqualität.

Gleichwohl muss auch bei der "schwimmenden" Anordnung des Werkstücks am Spannfutter für einen guten Halt gesorgt werden. Aus diesem Grund kommen Magnetspannfutter zum Einsatz. Es hat sich jedoch gezeigt, dass die Aufnahme der Werkstücke über Magnetspannfutter den Einsatzbereich des Schuhschleifens limitiert.

Aus der US 1,618,378 A ist ein Vakuum-Spannfutter bekannt, das in einem Rundschleifverfahren mit konzentrischer Ausrichtung zwischen Werkstück und Spannfutter eingesetzt wird. Aus der JP 2012-179699 A ist ein Spannfutter für das Rundschleifen mit konzentrischer Ausrichtung zwischen Werkstück und Spannfutter bekannt, wobei das Werkstück sowohl über Unterdruck gehalten als auch kraftschlüssig über Spannbacken gespannt wird. Aus der US 2011/0065367 A1 ist ein Verfahren zum Schleifen von Bogenflächen bekannt, wobei Schleifplatten mittels Unterdruck an einem Werkzeugträger aufgenommen sind.

Vor diesem Hintergrund liegt der Offenbarung die Aufgabe zugrunde, eine Schleifmaschine, insbesondere eine Schuhschleifmaschine oder eine zum Schuhschleifen geeignete Rundschleifmaschine, anzugeben, die eine hochpräzise Bearbeitung dünnwandiger ringförmiger und ähnlich gestalteter Bauteile ermöglicht. Vorzugsweise wird hierfür eine Spannvorrichtung verwendet, die nicht den Einsatzbeschränkungen magnetischer Spannvorrichtungen unterliegt. Gleichwohl soll eine hohe Genauigkeit, Maßhaltigkeit und Oberflächenqualität ermöglicht werden. Vorzugsweise kann die Schleifmaschine - im Vergleich zu konventionellen Schuhschleifmaschinen - ohne einen Mehraufwand oder mit einem überschaubaren Mehraufwand hergestellt und betrieben werden. Ferner soll nach Möglichkeit ein korrespondierendes Verfahren zum Schleifen dünnwandiger Werkstoffe angegeben werden, insbesondere mittels Schuhschleifen.

Gemäß einem ersten Aspekt der vorliegenden Offenbarung wird die Aufgabe durch eine Maschine zum Schleifen dünnwandiger Werkstücke mittels Schuhschleifen gemäß dem unabhängigen Maschinenanspruch gelöst.

Die Aufgabe der Erfindung wird auf diese Weise vollkommen gelöst.

Erfindungsgemäß wird nämlich nunmehr das Werkstück nicht über Magnetkräfte, sondern über fluidische Kräfte, insbesondere mittels Unterdruck, gehalten. Es wurde erkannt, dass auch unter Berücksichtigung der systembedingten Relativbewegungen zwischen dem Werkstück und dem Spannfutter beim Schuhschleifen gleichwohl eine hinreichend hohe Haltekraft ermöglicht ist. Demgemäß kann das Werkstück sicher gehalten werden, wobei weiterhin die durch den exzentrischen Versatz zwischen Werkstück und Spannfutter bedingte Relativbewegung stattfinden kann.

Das Ansaugen und Halten des Werkstücks mittels Saugkraft hat den Vorteil, dass auch Werkstücke bearbeitet werden können, die nicht über Magnetspannfutter gehalten werden können. Beispielsweise handelt es sich um Werkstücke aus Keramikwerkstoffen, Kunststoffen, Verbundwerkstoffe mit Faseranteil und Ähnliches. Es ist jedoch auch vorstellbar, Werkstücke aus Edelstahl mittels Unterdruck am Spannfutter zu halten. Es versteht sich, dass auch Werkstücke aus metallischen Werkstoffen, die grundsätzlich durch Magnetspannfutter gehalten werden können, über ein Spannfutter aufgenommen und abgestützt werden, das das Werkstück ansaugt.

Die Anlagefläche, an der das Werkstück, insbesondere mit einer Stirnseite, zur Anlage kommt, ist über zumindest eine darin eingebrachte Ausnehmung mit der Ansaugeinheit fluidisch verbindbar. Die Ansaugeinheit ist zur Erzeugung eines Unterdrucks ausgebildet.

Insbesondere kann es sich bei der Ansaugeinheit um eine pneumatische Ansaugeinheit handeln. Der gewünschte Unterdruck kann über eine entsprechende Pumpe erzeugt werden.

Es ist jedoch auch vorstellbar, eine ohnehin vorhandene Druckmittelversorgung (Druckluftversorgung) zu nutzen, wobei eine geeignete Strömungsführung vorgesehen ist, die schlussendlich in einem Unterdruck an der Anlagefläche resultiert. Demgemäß ist es nicht unbedingt erforderlich, Pumpen oder dergleichen bei der Maschine selbst vorzusehen. Eine denkbare Gestaltung umfasst etwa zumindest eine VenturiDüse zur Erzeugung des Unterdrucks.

Die Spannvorrichtung kann als Vakuum-Spannvorrichtung bezeichnet/ausgeführt werden. Folglich kann das Spannfutter als Vakuum-Spannfutter bezeichnet/ausgeführt werden. Allgemein kann ein Vakuum-Erzeuger vorgesehen/verbaut sein, um an der Anlagefläche einen Unterdruck bereitzustellen. Der Unterdruck erzeugt eine Haltekraft, wenn das Werkstück hinreichend eng an der Anlagefläche anliegt.

Grundsätzlich kann die Maschine als Schuhschleifmaschine bezeichnet werden. Generell handelt es sich bei der Maschine um eine spitzenlose Schleifmaschine, die mit sogenannten Gleitschuhen zur Abstützung des Werkstücks versehen ist.

Für das Werkstück ist eine Werkstückspindel vorgesehen. Demgemäß ist ein Antrieb vorgesehen, der das Spannfutter für das Werkstück in eine Rotationsbewegung versetzen kann.

Das Werkstück ist hinreichend fest an der Anlagefläche aufgenommen. Die Anlagefläche und die Abstützeinheit mit dem zumindest einen Stützschuh sorgen für eine sichere und präzise Lagerung/Führung des Werkstücks.

Das Werkstück ist häufig dünnwandig gestaltet. Demgemäß ist das Werkstück regelmäßig als Hohlkörper oder Rohrkörper gestaltet. Insbesondere kann das Werkstück ringartig gestaltet sein. Typische Werkstücke, die etwa mittels Schuhschleifen bearbeitet werden, sind etwa Lagerringe für Wälzlager, Gleitlager und dergleichen.

Die Maschine kann grundsätzlich zur Außenbearbeitung gestaltet sein. Es ist jedoch auch vorstellbar, die Maschine zur Innenbearbeitung zu nutzen. Es ist grundsätzlich auch vorstellbar, die Maschine zur kombinierten Innenbearbeitung/Außenbearbeitung zu nutzen. Die Innenbearbeitung ist möglich, da das Werkstück zumindest in beispielhaften Ausführungsformen lediglich einseitig an der Anlagefläche des Spannfutters aufgenommen ist.

Während der Bearbeitung drehen sich sowohl das Spannfutter als auch das daran aufgenommene Werkstück. Jedoch ist das Werkstück relativ zur Längsachse des Spannfutters exzentrisch gehalten und geführt. Der Begriff "exzentrisch" bezieht sich auf die Längsachse, um die das Spannfutter rotiert. Folglich kann es sich um die Längsachse einer Werkstückspindel handeln. Die Abstützeinheit definiert die Exzentrizität. Dank der Saugkraft kann das Werkstück auch in exzentrischer Ausrichtung gehalten werden, wenn das Spannfutter rotiert.

Die Exzentrizität ist zumindest in beispielhaften Ausführungsformen in Relation zum Durchmesser des Werkstücks relativ klein. Die Exzentrizität ist kleiner als die Wanddicke des Werkstücks. Beispielhaft kann die Exzentrizität wenige Zehntelmillimeter betragen. Wesentlich ist, dass die damit einhergehende Verschiebung des Werkstücks an der Anlagefläche nicht dazu führt, dass die Haltekraft abrupt einbricht.

Gemäß einer beispielhaften Ausführungsform ist die Maschine dazu ausgebildet, das Werkstück während der Rotationsbewegung des Spannfutters mit dem Spannfutter zu rotieren, und während der Rotationsbewegung des Spannfutters eine Relativbewegung zwischen dem Spannfutter und dem Werkstück stattfinden zu lassen.

Zumindest in beispielhaften Ausführungsformen weisen sowohl die Anlagefläche am Spannfutter als auch die dieser zugewandte Stirnfläche des Werkstücks eine hinreichend gute Oberflächenqualität (Ebenheit, Rauheit, etc.) auf. Auf diese Weise werden trotz der Relativbewegung zwischen dem Werkstück und der Anlagefläche Leckströmungen verringert. Dies trägt dazu bei, eine hinreichend hohe Haltekraft bereitzustellen.

Gemäß einer weiteren beispielhaften Ausführungsform stellt die Ansaugeinheit an der Anlagefläche einen Unterdruck zur Drehmitnahme des Werkstücks durch das rotierende Spannfutter bereit. Dies heißt mit anderen Worten, dass die Ansaugeinheit nicht nur verhindern soll, dass das Werkstück vom Spannfutter abfällt. Vielmehr sorgt die Ansaugeinheit auch für eine Momentenübertragung zum Antrieb des Werkstücks während der Bearbeitung.

An der Anlagefläche ist eine Ansaugkontur ausgebildet, in der die zumindest eine Ausnehmung angeordnet ist. Vorzugsweise ist die Ansaugkontur an eine gegebene Stirnfläche des Werkstücks angepasst, die dort zur Anlage kommt. Mit anderen Worten ist die Ansaugkontur so dimensioniert, dass die Stirnfläche des Werkstücks die Ansaugkontur abdeckt.

Gemäß einer weiteren beispielhaften Ausführungsform ist in der Ansaugkontur eine Mehrzahl von Ausnehmungen ausgebildet. Auf diese Weise kann über den Umfang des Werkstücks eine Mehrzahl von "Saugabschnitten" bereitgestellt werden. Dies erhöht die Funktionssicherheit bzw. die Betriebssicherheit.

Gemäß einer weiteren beispielhaften Ausführungsform sind die Ausnehmungen um die Längsachse verteilt und beispielsweise kreisförmig angeordnet. Auf diese Weise kann eine Mehrzahl von Ausnehmungen entlang der Stirnfläche des Werkstücks angeordnet sein.

Gemäß einer weiteren beispielhaften Ausführungsform sind die Ausnehmungen als stirnseitig eingebrachte Ringabschnittsnuten gestaltet. Dies hat den Vorteil, dass ein hoher Anteil der grundsätzlich zur Verfügung stehenden Fläche auch für das Ansaugen zur Verfügung steht.

Gemäß einer weiteren beispielhaften Ausführungsform ist die Maschine derart gestaltet, dass während der Bearbeitung des Werkstücks die zumindest eine Ausnehmung an Abmessungen der Stirnseite des Werkstücks sowie an einen gewählten exzentrischen Versatz zwischen Spannfutter und Werkstück angepasst ist. Mit anderen Worten ist die Ansaugkontur so dimensioniert, dass die Stirnfläche des Werkstücks die Ansaugkontur, insbesondere deren Ausnehmungen abdeckt, und zwar auch bei dem gewählten Versatz und der damit einhergehenden Relativbewegung zwischen Werkstück und Spannfutter.

Die grundsätzlich für das Ansaugen zur Verfügung stehende Fläche ergibt sich aus der Stirnfläche des Werkstücks, die zur Anlage an der Anlagefläche bestimmt ist, gegebenenfalls vermindert um Anteile, die sich aus dem gewählten exzentrischen Versatz zwischen Werkstück und Spannfutter ergeben.

Gemäß einer weiteren beispielhaften Ausführungsform ist die Anlagefläche auswechselbar. Demgemäß kann die Anlagefläche etwa als Blende bzw. Einsatz gestaltet sein. Die Anlagefläche kann auf diese Weise noch besser an verschiedene Werkstücke angepasst werden. Die Anlagefläche kann folglich als auswechselbarer Einsatz am Spannfutter aufgenommen sein.

Gemäß einer weiteren beispielhaften Ausführungsform der Maschine weist die Abstützeinheit zwei Stützschuhe auf, die am Werkstückumfang zueinander in einer Umfangsrichtung versetzt angeordnet sind. Von den beiden Stützschuhen ist beispielsweise einer in der Nachbarschaft des Schleifwerkzeugs und ein anderer dem Schleifwerkzeug gegenüberliegend angeordnet.

Das Verfahren betreffend wird die Aufgabe der Erfindung durch ein Verfahren zum Schleifen dünnwandiger, ringartiger Werkstücke, insbesondere dünnwandiger Ringe, gemäß dem unabhängigen Verfahrensanspruch gelöst.

Auch auf diese Weise wird die Aufgabe der Erfindung vollkommen gelöst.

Auf diese Weise kann das Spannen des Werkstücks mittels Magnetspannfutter vermieden werden. Zur Erzeugung des Unterdrucks kann eine ohnehin schon vorgesehene Druckluftversorgung genutzt werden. Es versteht sich jedoch auch, dass Saugeinheiten nutzbar sind, die genau für diesen Zweck bei der Maschine vorgesehen sind.

Gemäß einer beispielhaften Ausführungsform weist das Verfahren ferner Folgendes auf:
- Bereitstellung einer Spannvorrichtung, die eine Ansaugkontur aufweist, die auf der Anlagefläche ausgebildet ist,
wobei die Ansaugkontur an Abmessungen der Stirnseite des Werkstücks sowie an einen gewählten exzentrischen Versatz zwischen Spannfutter und Werkstück angepasst ist.

Gemäß einer weiteren beispielhaften Ausführungsform umfasst das Verfahren ferner eine Innenbearbeitung und eine Außenbearbeitung des über seine Stirnfläche an der Anlagefläche aufgenommenen Werkstücks. Dies kann simultan oder zeitlich versetzt erfolgen.

Dies kann beispielsweise bei einem Lagerring eine Bearbeitung des Innendurchmessers und eine Bearbeitung des Außendurchmessers bzw. der entsprechenden Flächen umfassen. Die Innenbearbeitung und die Außenbearbeitung können zeitlich versetzt stattfinden. Es ist grundsätzlich auch vorstellbar, das Werkstück zumindest zeitweise gleichzeitig außen und innen zu bearbeiten.

Je nach tatsächlicher Ausgestaltung und Bearbeitungsaufgabe sind exemplarisch folgende Bearbeitungsmodi vorstellbar: Innenbearbeitung eines Werkstücks (ohne Außenbearbeitung), Außenbearbeitung eines Werkstücks (ohne Innenbearbeitung), zeitlich versetzte Innenbearbeitung und Außenbearbeitung eines Werkstücks, und simultane (zeitlich überlappende) Innenbearbeitung und Außenbearbeitung eines Werkstücks.

Die Aufgabe der Offenbarung wird ferner durch eine Verwendung einer Maschine gemäß dem unabhängigen Verwendungsanspruch gelöst.

Gemäß einer beispielhaften Ausführungsform wird die Schleifmaschine zur Herstellung keramischer Lagerringe verwendet. Solche Bauteile lassen sich nicht über Magnetspannfutter spannen, so dass die Bearbeitung mittels Schuhschleifen besondere Maßnahmen erfordert. Es versteht sich, dass auch andere Werkstücke geschliffen werden können.

Allgemein ist die Verwendung der Maschine zur Herstellung/Bearbeitung von Werkstücken aus amagnetischen bzw. nichtmagnetischen Werkstoffen denkbar. Hierbei handelt es sich regelmäßig um solche Werkstoffe, bei denen etwa im Vergleich zu Baustahl ein eingebrachtes Magnetfeld deutlich geringere Auswirkungen (Anziehung/Abstoßung) hat. Demgemäß handelt es sich im Sinne der vorliegenden Offenbarung bei amagnetischen bzw. nichtmagnetischen Werkstoffe um solche Werkstoffe, die nicht zur Aufnahme an einem Magnetspannfutter geeignet sind. Es versteht sich, dass auch magnetische Werkstücke bearbeitet werden können.

Weitere Merkmale und Vorteile der Erfindung ergeben sich aus der nachfolgenden Beschreibung und Erläuterung mehrerer beispielhafter Ausführungsbeispiele unter Bezugnahme auf die Zeichnungen. Es zeigen:
- Fig. 1: eine perspektivische Ansicht einer beispielhaften Ausführungsform einer als Schleifmaschine ausgebildeten Werkzeugmaschine;
- Fig. 2: eine perspektivische Ansicht einer Werkstückaufnahme mit einer Werkstückspindel, die mit einer Abstützeinheit zum Schuhschleifen versehen ist;
- Fig. 3: eine frontale vereinfachte Teilansicht einer Werkstückaufnahme mit einem Werkstück, das an einer Abstützeinheit aufgenommen ist, wobei ein Werkzeug auf das Werkstück einwirkt, zur Veranschaulichung eines Schuhschleifvorgangs;
- Fig. 4: eine perspektivische Ansicht eines Spannfutters mit einer Anlagefläche für ein Werkstück;
- Fig. 5: eine frontale vereinfachte Ansicht einer Anlagefläche eines Spannfutters, das ähnlich dem Spannfutter gemäß Fig. 4 gestaltet ist;
- Fig. 6: ein schematisches, vereinfachtes Blockschaltbild einer Anordnung zum Schuhschleifen, die mit einer Ansaugeinheit zum Halten des Werkstücks versehen ist; und
- Fig. 7: ein schematisches Blockdiagramm zur Veranschaulichung einer beispielhaften Ausführungsform eines Verfahrens zum Schleifen dünnwandiger Werkstücke mittels Schuhschleifen.

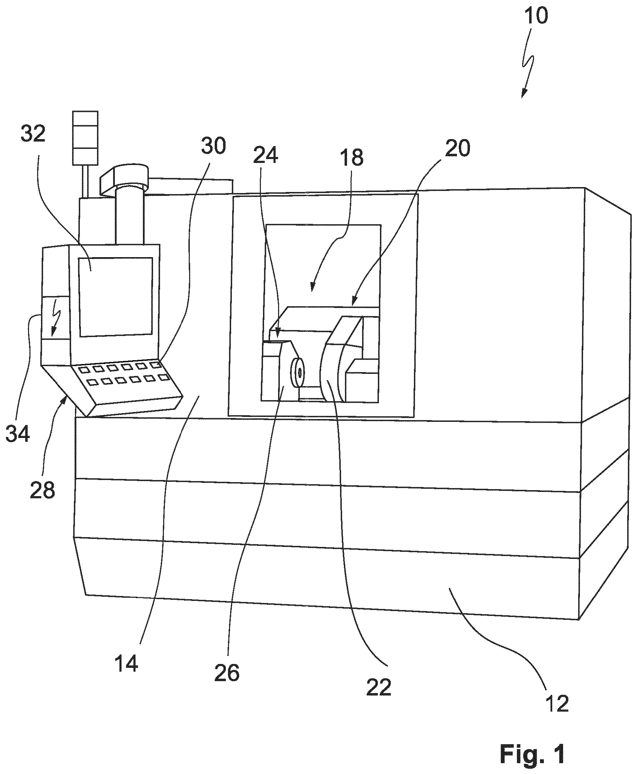

In Fig. 1 ist eine Werkzeugmaschine perspektivisch dargestellt und insgesamt mit 10 bezeichnet. Die Werkzeugmaschine 10 ist vorliegend als Schleifmaschine ausgebildet, insbesondere als Rundschleifmaschine, allgemein auch als Horizontalschleifmaschine. Die Werkzeugmaschine 10 weist ein Maschinenbett 12 sowie eine Einhausung 14 auf, die als Gehäuse fungiert. Es versteht sich, dass auch eine Gestaltung als Vertikalschleifmaschine vorstellbar ist.

Die Einhausung 14 definiert dabei einen Prozessraum, der vorzugsweise nach außen abgeschlossen ist oder abschließbar ist. Die Einhausung 14 erlaubt insbesondere bei automatisierten Bearbeitungsvorgängen eine sichere Abgrenzung des Prozessraums der Werkzeugmaschine 10. Auf diese Weise kann grundsätzlich die von beweglichen Komponenten ausgehende Gefahr minimiert werden. Ferner kann ein unerwünschter Austritt von Schmiermittel, Kühlflüssigkeit, Spänen oder beispielsweise Funken in die Umgebung unterbunden werden. Die Einhausung 14 kann in geeigneter Weise mit Türen oder Klappen versehen sein, um den Prozessraum der Werkzeugmaschine 10 zugänglich zu machen.

Bei besonderen Betriebsmodi kann es erforderlich sein, das Sichtfenster als eine Art Schutztür auszubilden, um den Innenraum der Werkzeugmaschine durch einen Bediener von außen erreichbar zu machen. Zu diesem Zweck kann das Sichtfenster beispielhaft seitlich verschoben bzw. verschwenkt werden, um eine zuvor verschlossene Öffnung freizugeben. Betriebsmodi, die einen Zugang in den Innenraum der Werkzeugmaschine 10 erforderlich machen, können beispielsweise Rüstvorgänge, Einrichtvorgänge, Abrichtvorgänge oder allgemein Werkzeugwechsel- bzw. Werkstückwechselvorgänge sein. Es versteht sich, dass abhängig von dem Automatisierungsgrad der Werkzeugmaschine 10 verschiedene Betriebsmodi einen manuellen Zugang in den Innenraum der Werkzeugmaschine 10 erforderlich machen können.

In Fig. 1 ist ferner im Innenraum der Werkzeugmaschine 10 eine Werkzeugspindel 18 mit einem Spindelkopf 20 angedeutet. Die Werkstückspindel 18 kann auch als Schleifspindel bezeichnet werden. Am Spindelkopf 20 ist ein Werkzeug 22 aufgenommen. Bei diesem Werkzeug 22 kann es sich insbesondere um ein Schleifwerkzeug, vorzugsweise um eine Schleifscheibe handeln.

Die Werkzeugmaschine 10 weist zudem eine Werkstückaufnahme 24 mit einer Werkstückspindel 26 auf, die zur Aufnahme eines Werkstücks ausgebildet ist. Aus Gründen der Übersicht ist in Fig. 1 kein Werkstück dargestellt. Der Spindelkopf 20 kann zur Bearbeitung eines Werkstücks relativ zur Werkstückspindel 26 regelmäßig in zumindest zwei Raumrichtungen verfahren werden. Beim Einstechschleifen genügt es, wenn der Spindelkopf 20 in zumindest einer Raumrichtung verfahrbar ist.

Werkzeugmaschinen 10 weisen üblicherweise eine Bedienerschnittstelle 28 auf, die außerhalb des Innenraums der Werkzeugmaschine 10 angeordnet ist. Folglich kann ein Bediener die Werkzeugmaschine 10 steuern, programmieren, regeln und/oder beispielsweise Diagnosen durchführen, ohne mit dem Innenraum der Werkzeugmaschine 10 in Kontakt zu kommen. Bei der Bedienerschnittstelle 28 handelt es sich vorzugsweise um eine Bedieneinheit, die zumindest eine Eingabeeinheit 30 zur Eingabe von Steuerbefehlen aufweist. Die Bedienerschnittstelle 28 kann zudem eine Ausgabeeinheit 32, beispielsweise einen Bildschirm aufweisen. Ferner ist es denkbar, einen sogenannten Touchscreen zu verwenden, also eine kombinierte Eingabe- und Ausgabeeinheit.

Ferner ist in Fig. 1 mit 34 eine Steuereinrichtung angedeutet. Die Steuereinrichtung 34 steuert die Werkzeugmaschine 10, insbesondere deren Antriebe, Sensoren, Aktoren, etc. Die Steuereinrichtung 34 muss nicht zwingend (baulich) in die Bedienerschnittstelle 28 integriert sein. Die Steuereinrichtung 34 kann als verteilte Steuereinrichtung ausgebildet sein. Die Werkzeugmaschine 10 kann auch über externe Steuereinrichtungen angesteuert werden, die über Signalleitungen angekoppelt sind.

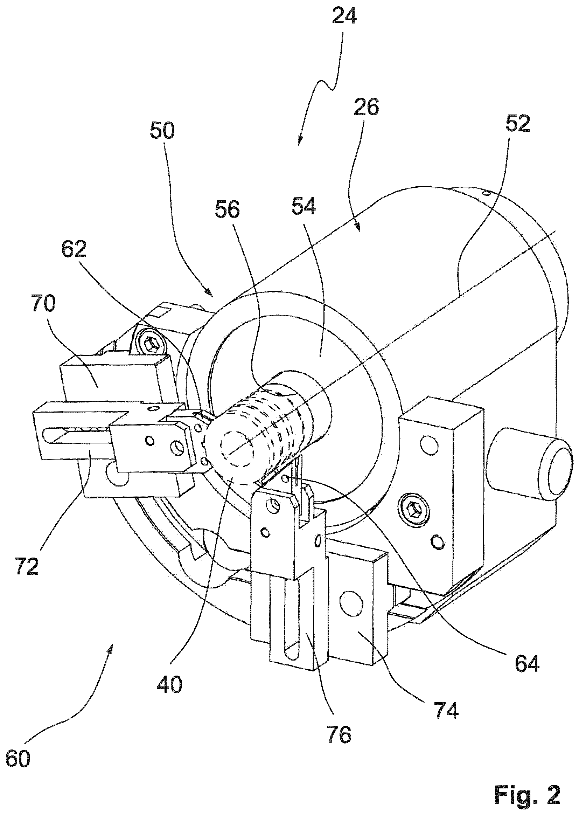

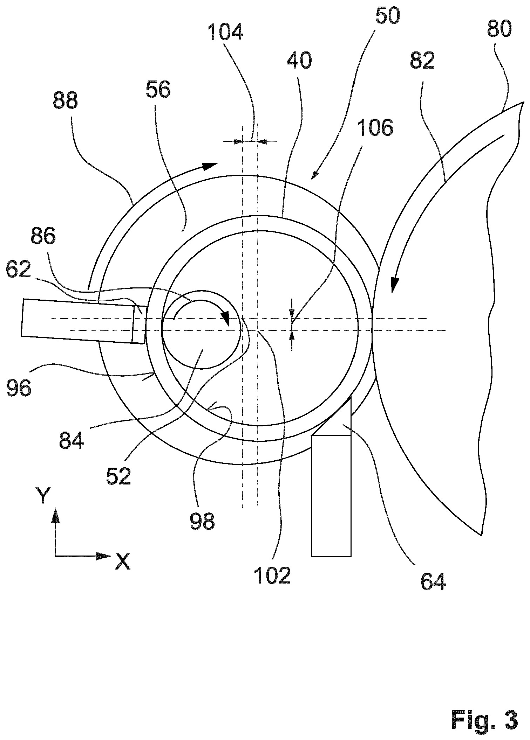

Mit Bezugnahme auf Fig. 2 und Fig. 3 wird eine beispielhafte Ausführungsform einer Werkstückaufnahme 24 veranschaulicht, die zum Schuhschleifen geeignet ist. Fig. 2 ist eine perspektivische Darstellung, wobei auf die Darstellung eines Schleifwerkzeugs verzichtet wurde. Fig. 3 ist eine schematische frontale Ansicht, wobei das Schleifwerkzeug nur teilweise gezeigt ist.

In Fig. 2 ist ein mit 40 bezeichnetes Werkstück (gestrichelt dargestellt) an der Werkstückaufnahme 24 aufgenommen. Die Werkstückaufnahme 24 ist als Werkstückspindel 26 ausgeführt und folglich rotatorisch antreibbar. Für das Werkstück 40 ist eine mit 50 bezeichnete Spannvorrichtung vorgesehen. Die Spannvorrichtung 50 ist um ihre Längsachse 52 rotierbar. Die Spannvorrichtung 50 weist ein Spannfutter 54 auf. Am Spannfutter 54 ist eine Anlagefläche 56 ausgebildet, an der das Werkstück 40 mit seiner Stirnseite anliegt und gehalten wird.

Die Anlagefläche 56 kann Bestandteil eines auswechselbaren Einsatzes des Spannfutters 54 sein. Auf diese Weise kann ein und dasselbe Spannfutter 54 für unterschiedlich gestaltete Werkstücke 40 verwendet werden.

Fig. 2 veranschaulicht ferner eine mit 60 bezeichnete Abstützeinheit. Die Abstützeinheit 60 weist einen ersten Stützschuh 62 und einen zweiten Stützschuh 64 auf. Die Stützschuhe 62, 64 sind am Umfang des Werkstücks 40 in Umfangsrichtung zueinander versetzt. Das Werkstück 40 stützt sich an den Stützschuhen 62, 64 ab. Der erste Stützschuh 62 ist an einem Halter 70 aufgenommen. Ferner ist ein Verstellmechanismus 72 zur Verrstellung des ersten Stützschuhs 62 vorgesehen. Der zweite Stützschuh 64 ist an einem Halter 74 aufgenommen. Ferner ist ein Verstellmechanismus 76 zur Verrstellung des zweiten Stützschuhs 64 vorgesehen.

Fig. 3 veranschaulicht schematisch eine grundsätzlich ähnliche Gestaltung zum Schuhschleifen. Fig. 3 zeigt eine frontale Ansicht auf eine Stirnfläche eines Werkstücks 40, das an einer Spannvorrichtung 50 zur Bearbeitung aufgenommen ist. Das Werkstück 40 liegt an einer Anlagefläche 56 an. Ferner sind Stützschuhe 62, 64 vorgesehen, die das Werkstück 40 an seinem Außenumfang abstützen.

Fig. 3 veranschaulicht ferner ein mit 80 bezeichnetes Werkzeug zur Außenbearbeitung bzw. zum Außenrundschleifen. Eine Drehrichtung des Werkzeugs 80 wird durch einen mit 82 bezeichneten Pfeil veranschaulicht. Ferner zeigt Fig. 3 ein mit 84 bezeichnetes Werkzeug zur Innenbearbeitung bzw. zum Innenrundschleifen. Eine Drehrichtung des Werkzeugs 84 wird durch einen mit 86 bezeichneten Pfeil veranschaulicht. Die Werkzeuge 80, 84 sind als Schleifscheiben gestaltet.

Ein mit 88 bezeichneter Pfeil veranschaulicht eine Drehrichtung der Spannvorrichtung 50 und folglich des daran aufgenommenen Werkstücks 40. Das Werkstück 40 und das Werkzeug 80 für die Außenbearbeitung rotieren gegensinnig. Das Werkstück 40 und das Werkzeug 84 für die Innenbearbeitung rotieren gleichsinnig.

Es versteht sich, dass die in Fig. 3 veranschaulichte beispielhafte Ausgestaltung nicht einschränkend zu verstehen ist. Es können auch von der Gestaltung in Fig. 3 abweichende Drehorientierungen (gegenläufig/gleichläufig) vorgesehen sein.

Die Außenbearbeitung erfolgt an einer Außenfläche 96 des Werkstücks 40. Die Innenbearbeitung erfolgt an einer Innenfläche 98 des Werkstücks 40. Es versteht sich, dass ohne weiteres Ausführungsbeispiele vorstellbar sind, bei denen entweder nur eine Bearbeitung der Außenfläche 96 oder nur der Innenfläche 98 stattfindet. Auch in dieser Hinsicht ist Fig. 3 nicht einschränkend zu verstehen.

In Fig. 3 ist ferner mit 52 die Längsachse der Spannvorrichtung 50 angedeutet. Die Längsachse 52 ist die Rotationsachse der Spannvorrichtung 50. Ferner ist mit 102 ein Zentrum (also auch eine Achse) des Werkstücks 40 angedeutet. Wie vorstehend bereits dargelegt, gibt es beim Schuhschleifen regelmäßig einen Versatz zwischen dem Zentrum 102 des Werkstücks 40 und der Längsachse 52 der Spannvorrichtung 50 bzw. der Werkstückspindel 26.

In Fig. 3 veranschaulicht das Bezugszeichen 104 einen Versatz in einer X-Richtung. Ferner veranschaulicht das Bezugszeichen 106 ein Versatz in einer Y-Richtung. Die X-Richtung kann grundsätzlich als Zustellrichtung bezeichnet werden. Die X-Richtung ist senkrecht zur Längsachse 52 der Spannvorrichtung 50. Die Y-Richtung ist senkrecht zur X-Richtung und senkrecht zur Längsachse 52. Das Voranstehende dient vorrangig zur Veranschaulichung und ist folglich nicht in einschränkender Weise auszulegen.

Üblicherweise beträgt der Versatz zwischen dem Zentrum 102 des Werkstücks 40 und der Längsachse 52 der Werkstückspindel 26 wenige Zehntelmillimeter. Der Versatz, also die Exzentrizität des Werkstücks 40 gegenüber der Werkstückspindel 26, wird in Abhängigkeit vom zu bearbeitenden Werkstück 40, insbesondere in Abhängigkeit von dessen Abmessungen, gewählt.

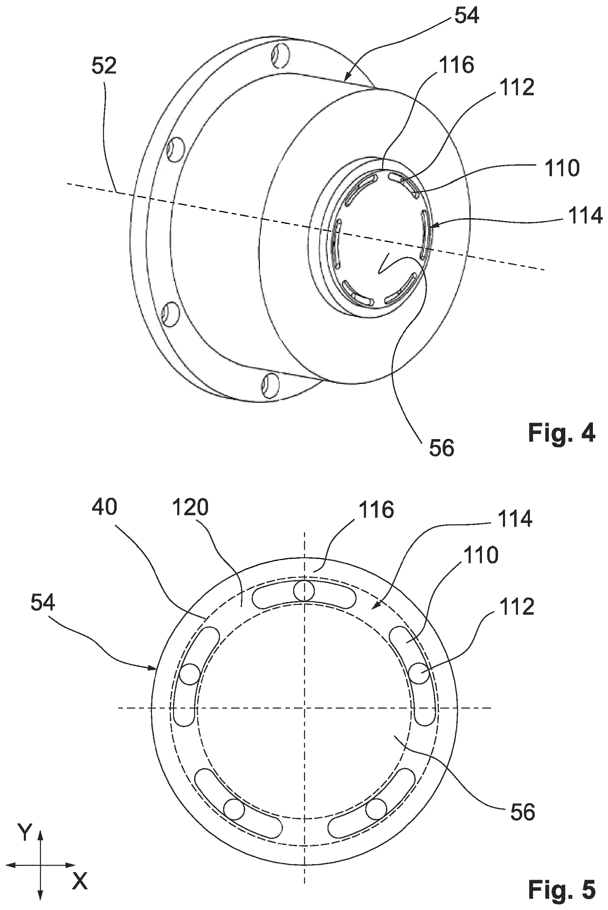

Wie vorstehend bereits ausgeführt, ist das Spannfutter 54 mit der Anlagefläche 56 vorzugsweise dazu ausgebildet, das Werkstück 40 mittels Unterdruck zu halten. Eine beispielhafte Ausgestaltung des Spannfutters 54 wird unter Bezugnahme auf Fig. 4 veranschaulicht. Fig. 5 veranschaulicht eine ähnliche Ausgestaltung.

Fig. 4 zeigt eine perspektivische Ansicht eines Spannfutters 54, dessen Anlagefläche 56 mit zumindest einer Ausnehmung 110 versehen ist. Die zumindest eine Ausnehmung 110 kann auch als Öffnung bezeichnet werden. Nach innen folgt ein Durchtritt 112 auf die Ausnehmung 110. Der Durchtritt 112 ist etwa als Bohrung gestaltet. Die Ausnehmung 110 ist etwa als Langloch bzw. als gekrümmtes Langloch gestaltet. Der Durchtritt 112 hat einen deutlich kleineren Querschnitt als die Ausnehmung 110.

Die beispielhafte Ausführungsform gemäß Fig. 4 weist insgesamt sechs kreisförmig angeordnete Ausnehmungen 110 auf. Beispielhaft ist jeder der Ausnehmungen 110 ein Durchtritt 112 zugeordnet. Die Ausnehmungen 110 bilden eine ringförmige Ansaugkontur 114.

In einer beispielhaften Ausgestaltung ist die Anlagefläche 56 mit der Ansaugkontur 114 an einem Einsatz 116 ausgebildet, der auswechselbar ist. Folglich kann der Einsatz 116 vom Spannfutter 54 gelöst und ausgetauscht werden. Auf diese Weise kann die Ansaugkontur 114 an die gegebene Gestaltung des Werkstücks 40 angepasst werden.

Fig. 5 veranschaulicht anhand einer gestrichelten Darstellung des Werkstücks 40 die Stirnfläche 120, mit der das Werkstück 40 an der Anlagefläche 56 bzw. der Ansaugkontur 114 zur Anlage kommt. Aus Veranschaulichungsgründen ist in Fig. 5 der exzentrische Versatz zwischen dem Werkstück 40 und dem Spannfutter 54 nicht dargestellt.

Vorzugsweise kommt das Werkstück 40 mit seiner Stirnfläche 120 derart an der Anlagefläche 56 zur Anlage, dass die Ansaugkontur 114 vollständig durch die Stirnfläche 120 überdeckt ist. Auf diese Weise können sich hohe Haltekräfte ergeben. Mit anderen Worten wird die Ansaugkontur 114 gemäß beispielhaften Ausführungsformen derart gewählt, dass die Stirnfläche 120 die Ansaugkontur 114 auch dann überdeckt, wenn das Werkstück 40 leicht exzentrisch gegenüber dem Spannfutter 54 versetzt ist, und auch dann wenn es während der Bearbeitung eine entsprechende Relativbewegung während der gemeinsam Rotation des Spannfutters 54 mit dem Werkstück 40 gibt.

Es versteht sich, dass die Ansaugkontur 114 auch abweichend von den in den Figuren 4 und 5 gezeigten Ausführungsbeispielen gestaltet sein kann. Wesentlich ist, dass von der theoretisch zur Verfügung stehenden Stirnfläche 120 des Werkstücks eine hinreichend große Fläche für das Ansaugen genutzt wird. Eine Unterteilung der Ansaugkontur 114 in Teilflächen (entsprechend den Ausnehmungen 110) sorgt für eine gewisse Redundanz und Funktionssicherheit.

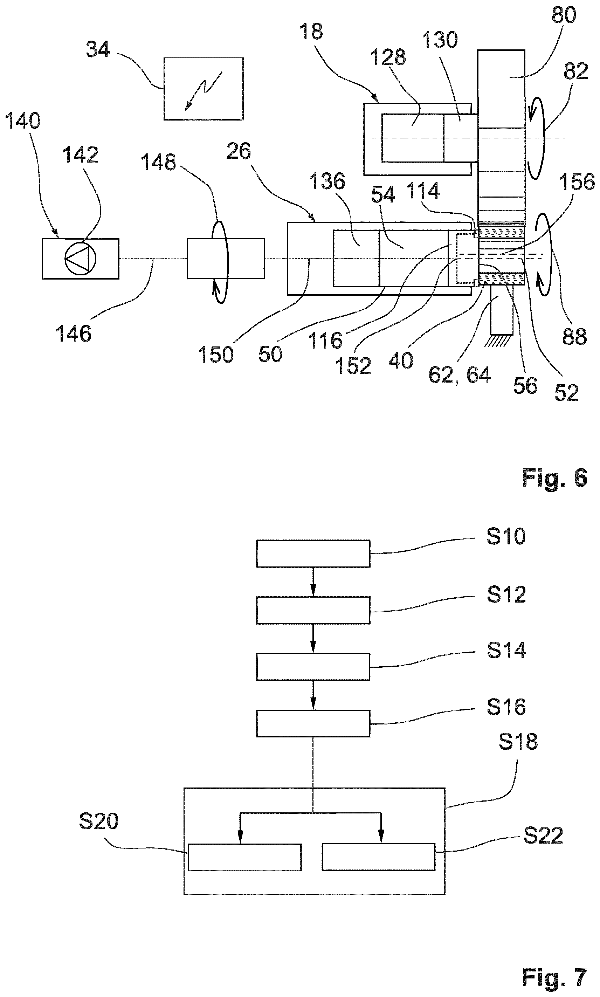

Fig. 6 veranschaulicht anhand einer stark vereinfachten Symboldarstellung eine weitere beispielhafte Ausführungsform einer Spannvorrichtung 50, die zur Aufnahme eines Werkstücks 40 durch Unterdruck und zur Verwendung in einem Schuhschleifverfahren vorgesehen ist.

Die Spannvorrichtung 50 ist einer Werkstückspindel 26 zugeordnet, vergleiche hierzu auch Fig. 1 und Fig. 2. Die Spannvorrichtung 50 weist ein Spannfutter 54 auf, an dem ein Einsatz 116 aufgenommen ist. Am Einsatz 116 ist eine Anlagefläche 56 mit einer Ansaugkontur 114 ausgebildet. Über die Ansaugkontur 114 wird das Werkstück 40 mittels Unterdruck angesaugt und gehalten.

Ferner ist eine Werkzeugspindel 18 angedeutet, die ein Werkzeug 80 in Form einer Schleifscheibe trägt. Die Werkzeugspindel 18 weist beispielhaft einen Antrieb 128 und eine Werkzeugaufnahme 130 auf. Das Werkzeug 80 ist an der Werkzeugaufnahme 130 aufgenommen. Der Antrieb 128 ist dazu vorgesehen, die Werkzeugaufnahme 130 und das Werkzeug 80 rotatorisch anzutreiben, vergleiche den Pfeil 82 in Fig. 6.

Die Werkstückspindel 26 weist einen Antrieb 136 auf, der auch als Spindelantrieb bezeichnet werden kann. Der Antrieb 136 ist mit der Spannvorrichtung 50 bzw. dem Spannfutter 54 gekoppelt, um das Spannfutter 54 rotatorisch anzutreiben. Auf diese Weise kann das an der Anlagefläche 56 aufgenommene Werkstück 40 rotatorisch angetrieben werden, vergleiche den Pfeil 88 in Fig. 6.

Vorzugsweise erfolgt Spannen des Werkstücks 40 am Spannfutter 54 mittels Unterdruck. Zu diesem Zweck ist die Werkstückspindel 26 zumindest in dem in Fig. 6 gezeigten Ausführungsbeispiel mit einer Ansaugeinheit 140 verbunden, insbesondere fluidisch verbunden. Die Ansaugeinheit 140 ist beispielhaft mit einer Pumpe 142 zur Erzeugung eines Unterdrucks versehen. Zur Fluidleitung bzw. zur Evakuierung sind Leitungen 146, 150 vorgesehen, die die Ansaugeinheit 140 mit der Werkstückspindel 26 bzw. mit der Ansaugkontur 114 verbinden.

In dem in Fig. 6 gezeigten Ausführungsbeispiel ist ferner eine mit 148 bezeichnete Drehdurchführung vorgesehen, die eine fluidische Verbindung mit dem rotierbaren Spannfutter 52 ermöglicht. Wie vorstehend bereits ausgeführt weist die Ansaugkontur 114 vorzugsweise mehrere Öffnungen bzw. Ausnehmungen 110 auf. Folglich ist es vorstellbar, eine Verzweigung 152 in der Leitung 150 vorzusehen, um sämtliche der Ausnehmungen 110 mit der Ansaugeinheit 140 zu koppeln.

Ferner ist in Fig. 6 durch die Bezugszeichen 62, 64 zumindest ein Stützschuh angedeutet, der das Werkstück 40 abstützt. Beim Schuhschleifen wird das Werkstück 40 bewusst mit seiner Längsachse 156 etwas versetzt zur Längsachse 52 der Werkstückspindel 26 gehalten. Auf diese Weise ergibt sich in Betrieb während der Bearbeitung eine gewisse Relativbewegung zwischen dem Werkstück 40 und der Anlagefläche 76.

Ferner ist in Fig. 6 mit 34 eine Steuereinrichtung angedeutet, die die Aktivitäten der Werkzeugspindel 18, der Werkstückspindel 26 und gegebenenfalls auch den Betrieb der Ansaugeinheit 140 steuert und überwacht.

Mit Bezugnahme auf Fig. 7 wird anhand eines Blockdiagramms eine beispielhafte Ausführungsform eines Verfahrens zum Schleifen dünnwandiger Werkstücke veranschaulicht. Vorzugsweise ist das Verfahren dazu geeignet und ausgebildet, unter Verwendung einer Schleifmaschine gemäß zumindest einer hierin gezeigten Ausgestaltung verwendet zu werden.

Das Verfahren umfasst einen ersten Schritt S10, der die Bereitstellung einer Schleifmaschine, insbesondere einer Schuhschleifmaschine, umfasst. Es folgt ein Schritt S12, der eine Zuführung eines Werkstücks zu einer Anlagefläche einer Spannvorrichtung der Schleifmaschine umfasst. Die Anlagefläche ist mit einer Ansaugkontur versehen, welche eine oder mehrere Ausnehmungen umfasst, die mit einer Ansaugeinheit zur Erzeugung eines Unterdrucks versehen sind.

In einem weiteren Schritt S14 wird das Werkstück unter Nutzung einer Abstützeinheit in einer außermittigen (exzentrischen) Position in Bezug auf eine Längsachse der Spannvorrichtung aufgenommen und positioniert.

Ein weiterer Schritt S16 umfasst ein Betreiben einer Ansaugeinheit zur Erzeugung/Bereitstellung eines Unterdrucks über zumindest eine Ausnehmung an der Anlagefläche des Spannfutters. Auf diese Weise wird das Werkstück an der Anlagefläche festgelegt und sicher gehalten.

Ein weiterer Schritt S18 umfasst die Bearbeitung des Werkstücks mit einem Werkzeug der Schleifmaschine. Der Schritt S18 umfasst Teilschritte S20 und S22. Der Teilschritt S20 umfasst die Erzeugung einer Relativrotation zwischen dem Werkstück und der Abstützeinheit. Zu diesem Zweck wird das Werkstück über die Werkzeugspindel angetrieben.

Der weitere Teilschritt S22 umfasst das Antreiben des Werkzeugs über die Werkzeug Spindel. Auf diese Weise ergibt sich eine Relativrotation zwischen dem Werkstück und dem Werkzeug. Ferner umfasst die Bearbeitung im Schritt S18 aufgrund der Exzentrizität zwischen dem Werkstück und der Spannvorrichtung beziehungsweise der Werkstückspindel eine (radiale) Relativbewegung zwischen dem Werkstück und der Werkstückspindel.

## Patentansprüche

1. Maschine (10) zum Schleifen dünnwandiger Werkstücke (40) mittels Schuhschleifen, mit
- einer Spannvorrichtung (50), die ein um eine Längsachse (52) rotierbares Spannfutter (54) aufweist, das eine Anlagefläche (56) für ein dünnwandiges, ringartiges Werkstück (40) bereitstellt,
wobei das Werkstück (40) am Spannfutter (54) gehalten ist,
- einer Abstützeinheit (60) mit zumindest einem Stützschuh (62, 64), die dazu ausgebildet ist, das Werkstück (40) in einer zur Längsachse (52) exzentrischen Lage zu stützen, und
- zumindest einer Schleifspindel (18), an der ein Schleifwerkzeug (80, 84) zur Bearbeitung des Werkstücks (40) aufnehmbar ist,
**dadurch gekennzeichnet,**
**dass** an der Anlagefläche (56) eine Ansaugkontur (114) ausgebildet ist, in der zumindest eine Ausnehmung (110) angeordnet ist, die mit einer Ansaugeinheit (140) zur Erzeugung einer Saugkraft koppelbar ist,
**dass** die Ansaugkontur (114) so dimensioniert ist, dass die Stirnfläche (120) des Werkstücks (40) während der Bearbeitung die Ansaugkontur (114) abdeckt, und
**dass** die Anlagefläche (56) derart gestaltet ist, dass das Werkstück (40) während der Bearbeitung über seine Stirnfläche (120) an der Anlagefläche (56) anliegt und aufgrund der Saugkraft exzentrisch am Spannfutter (54) gehalten ist.

2. Maschine (10) nach Anspruch 1, **dadurch gekennzeichnet, dass** die Maschine (10) dazu ausgebildet ist, das Werkstück (40) während der Rotationsbewegung des Spannfutters (54) mit dem Spannfutter (54) zu rotieren, und während der Rotationsbewegung des Spannfutters (54) eine Relativbewegung zwischen dem Spannfutter (54) und dem Werkstück (40) stattfinden zu lassen.

3. Maschine (10) nach Anspruch 1 oder 2, **dadurch gekennzeichnet, dass** die Ansaugeinheit (140) an der Anlagefläche (56) einen Unterdruck zur Drehmitnahme des Werkstücks (40) durch das rotierende Spannfutter (54) bereitstellt.

4. Maschine (10) nach Anspruch 1, **dadurch gekennzeichnet, dass** eine Mehrzahl von Ausnehmungen (110) in der Ansaugkontur (114) ausgebildet ist.

5. Maschine (10) nach Anspruch 4, **dadurch gekennzeichnet, dass** die Ausnehmungen (110) um die Längsachse (52) verteilt sind.

6. Maschine (10) nach Anspruch 5, **dadurch gekennzeichnet, dass** die Ausnehmungen (110) kreisförmig um die Längsachse (52) verteilt sind.

7. Maschine (10) nach einem der Ansprüche 4 bis 6, **dadurch gekennzeichnet, dass** die Ausnehmungen (110) als stirnseitig eingebrachte Ringabschnittsnuten gestaltet sind.

8. Maschine (10) nach einem der Ansprüche 1 bis 7, **dadurch gekennzeichnet, dass** die Maschine (10) derart gestaltet ist, dass während der Bearbeitung des Werkstücks (40) die zumindest eine Ausnehmung (110) an Abmessungen der Stirnfläche (120) des Werkstücks (40) sowie an einen gewählten exzentrischen Versatz zwischen Spannfutter (54) und Werkstück (40) angepasst ist.

9. Maschine (10) nach einem der Ansprüche 1 bis 8, **dadurch gekennzeichnet, dass** die Anlagefläche (56) auswechselbar gestaltet ist.

10. Maschine (10) nach einem der Ansprüche 1 bis 9, **dadurch gekennzeichnet, dass** die Abstützeinheit (60) zwei Stützschuhe (62, 64) aufweist, die am Werkstückumfang zueinander in einer Umfangsrichtung versetzt angeordnet sind.

11. Verfahren zum Schleifen dünnwandiger, ringartiger Werkstücke (40), insbesondere dünnwandiger Ringe, mit den folgenden Schritten:
- Bereitstellen einer Maschine (10), mit
- einer Spannvorrichtung (50), die ein um eine Längsachse (52) rotierbares Spannfutter (54) aufweist, das eine Anlagefläche (56) für ein dünnwandiges, ringartiges Werkstück (40) bereitstellt,
- einer Abstützeinheit (60) mit zumindest einem Stützschuh (62, 64), die dazu ausgebildet ist, das Werkstück (40) in einer zur Längsachse (52) exzentrischen Lage zu stützen, und
- zumindest einer Schleifspindel (18), an der ein Schleifwerkzeug (80, 84) zur Bearbeitung des Werkstücks (40) aufnehmbar ist,
wobei an der Anlagefläche (56) eine Ansaugkontur (114) ausgebildet ist, in der zumindest eine Ausnehmung (110) angeordnet ist, die mit einer Ansaugeinheit (140) zur Erzeugung einer Saugkraft koppelbar ist,
wobei die Ansaugkontur (114) so dimensioniert ist, dass die Stirnfläche (120) des Werkstücks (40) während der Bearbeitung die Ansaugkontur (114) abdeckt, und
wobei die Anlagefläche (56) derart gestaltet ist, dass das Werkstück (40) während der Bearbeitung über seine Stirnfläche (120) an der Anlagefläche (56) anliegt und aufgrund der Saugkraft exzentrisch am Spannfutter (54) gehalten ist,
- Zuführen des Werkstücks (40) zur Anlagefläche (56) der Spannvorrichtung (50),
- Positionieren des Werkstücks (40) in einer außermittigen Position in Bezug auf die Längsachse (52) des Spannfutters (54) der Spannvorrichtung (50),
- Betreiben der Ansaugeinheit (140) zur Bereitstellung eines Unterdrucks über zumindest eine Ausnehmung (110) an der Anlagefläche (56) des Spannfutters (54), und
- Bearbeiten des Werkstücks (40) mit dem Schleifwerkzeug (80, 84), umfassend
- Erzeugung einer Relativrotation zwischen dem am Spannfutter (54) aufgenommenen Werkstück (40) und der Abstützeinheit (60), und
- Antreiben des Schleifwerkzeugs (80, 84) zur Erzeugung einer Relativbewegung zwischen dem Werkstück (40) und dem Schleifwerkzeug (80, 84), wobei das Werkstück (40) über die Abstützeinheit (60) abgestützt wird, so dass sich aufgrund der Exzentrizität eine Relativbewegung zwischen dem Werkstück (40) und dem Spannfutter (54) ergibt.

12. Verfahren nach Anspruch 11, umfassend eine Innenbearbeitung und eine Außenbearbeitung des über seine Stirnfläche an der Anlagefläche (56) aufgenommenen Werkstücks (40).

13. Verwendung einer Maschine (10) nach einem der Ansprüche 1 bis 10 zum Schleifen von Werkstücken (40) aus nichtmagnetischen Werkstoffen, insbesondere zum Schleifen von Keramikwerkstücken.

14. Verwendung nach Anspruch 13 zur Herstellung keramischer Lagerringe.

## Claims

1. Machine (10) for grinding thin-walled workpieces (40) by means of shoe-type grinding, having
- a clamping apparatus (50) with a chuck (54) which is rotatable about a longitudinal axis (52) and provides a contact surface (56) for a thin-walled, ring-like workpiece (40),
wherein the workpiece (40) is held on the chuck (54),
- a supporting unit (60) which has at least one supporting shoe (62, 64) and is configured to support the workpiece (40) in an eccentric position in relation to the longitudinal axis (52), and
- at least one grinding spindle (18) on which a grinding tool (80, 84) for machining the workpiece (40) is able to be received,
**characterized**
**in that**, on the contact surface (56), there is formed a suction contour (114) in which there is arranged at least one recess (110) which is couplable to a suction unit (140) for generating a suction force,
**in that** the suction contour (114) is dimensioned in such a way that the end face (120) of the workpiece (40) covers the suction contour (114) during the machining, and
**in that** the contact surface (56) is configured in such a way that the workpiece (40), during the machining, bears against the contact surface (56) via its end face (120) and, owing to the suction force, is held eccentrically at the chuck (54).

2. Machine (10) according to Claim 1, **characterized in that** the machine (10) is configured to rotate the workpiece (40) with the chuck (54) during the rotational movement of the chuck (54), and to allow a relative movement between the chuck (54) and the workpiece (40) to take place during the rotational movement of the chuck (54).

3. Machine (10) according to Claim 1 or 2, **characterized in that** the suction unit (140) provides at the contact surface (56) a negative pressure for rotational driving of the workpiece (40) by the rotating chuck (54).

4. Machine (10) according to Claim 1, **characterized in that** multiple recesses (110) are formed in the suction contour (114).

5. Machine (10) according to Claim 4, **characterized in that** the recesses (110) are distributed around the longitudinal axis (52).

6. Machine (10) according to Claim 5, **characterized in that** the recesses (110) are distributed around the longitudinal axis (52) in a circular manner.

7. Machine (10) according to one of Claims 4 to 6, **characterized in that** the recesses (110) are configured as annular-segment grooves formed into an end face.

8. Machine (10) according to one of Claims 1 to 7, **characterized in that** the machine (10) is configured in such a way that, during the machining of the workpiece (40), the at least one recess (110) is adapted to dimensions of the end face (120) of the workpiece (40) and to a selected eccentric offset between the chuck (54) and the workpiece (40).

9. Machine (10) according to one of Claims 1 to 8, **characterized in that** the contact surface (56) is configured to be exchangeable.

10. Machine (10) according to one of Claims 1 to 9, **characterized in that** the supporting unit (60) has two supporting shoes (62, 64), which are arranged on the workpiece circumference so as to be offset from one other in a circumferential direction.

11. Method for grinding thin-walled, ring-like workpieces (40), in particular thin-walled rings, comprising the following steps:
- providing a machine (10) having
- a clamping apparatus (50) with a chuck (54) which is rotatable about a longitudinal axis (52) and provides a contact surface (56) for a thin-walled, ring-like workpiece (40),
- a supporting unit (60) which has at least one supporting shoe (62, 64) and is configured to support the workpiece (40) in an eccentric position in relation to the longitudinal axis (52), and
- at least one grinding spindle (18) on which a grinding tool (80, 84) for machining the workpiece (40) is able to be received,
wherein, on the contact surface (56), there is formed a suction contour (114) in which there is arranged at least one recess (110) which is couplable to a suction unit (140) for generating a suction force,
wherein the suction contour (114) is dimensioned in such a way that the end face (120) of the workpiece (40) covers the suction contour (114) during the machining, and wherein the contact surface (56) is configured in such a way that the workpiece (40), during the machining, bears against the contact surface (56) via its end face (120) and, owing to the suction force, is held eccentrically at the chuck (54),
- bringing the workpiece (40) up to the contact surface (56) of the clamping apparatus (50),
- positioning the workpiece (40) in an eccentric position in relation to the longitudinal axis (52) of the chuck (54) of the clamping apparatus (50),
- operating the suction unit (140) for providing a negative pressure via at least one recess (110) at the contact surface (56) of the chuck (54), and
- machining the workpiece (40) using the grinding tool (80, 84), which comprises
- generating a relative rotation between the workpiece (40) received at the chuck (54) and the supporting unit (60), and
- driving the grinding tool (80, 84) for generating a relative movement between the workpiece (40) and the grinding tool (80, 84),
wherein the workpiece (40) is supported via the supporting unit (60) so that, owing to the eccentricity, a relative movement between the workpiece (40) and the chuck (54) is obtained.

12. Method according to Claim 11, comprising internal machining and external machining of the workpiece (40) received via its end face at the contact surface (56).

13. Use of a machine (10) according to one of Claims 1 to 10 for grinding workpieces (40) composed of nonmagnetic materials, in particular for grinding ceramic workpieces.

14. Use according to Claim 13 for producing ceramic bearing rings.

## Revendications

1. Machine (10) pour le rectification de pièces (40) à paroi mince au moyen du rectification par appui sur patins, avec
- un dispositif de serrage (50), qui comporte un mandrin de serrage (54) pouvant tourner autour d'un axe longitudinal (52), lequel met à disposition une surface d'appui (56) pour une pièce (40) de type annulaire à paroi mince,
la pièce (40) étant maintenue sur le mandrin de serrage (54),
- une unité d'appui (60) comprenant au moins un patin d'appui (62, 64), qui est configurée pour soutenir la pièce (40) dans une position excentrée par rapport à l'axe longitudinal (52), et
- au moins une broche de rectification (18), sur laquelle un outil de rectification (80, 84) destiné à l'usinage de la pièce (40) peut être reçu,
**caractérisée**
**en ce qu'**un contour d'aspiration (114) est formé sur la surface d'appui (56), dans lequel est disposé au moins un évidement (110), qui peut être couplé à une unité d'aspiration (140) pour la génération d'une force d'aspiration,
**en ce que** le contour d'aspiration (114) est dimensionné de telle sorte que la surface frontale (120) de la pièce (40) recouvre le contour d'aspiration (114) pendant l'usinage, et
**en ce que** la surface d'appui (56) est conçue de telle sorte que la pièce (40) vient en appui par sa surface frontale (120) sur la surface d'appui (56) pendant l'usinage et est maintenue de manière excentrée sur le mandrin de serrage (54) en raison de la force d'aspiration.

2. Machine (10) selon la revendication 1, **caractérisée en ce que** la machine (10) est configurée pour faire tourner la pièce (40) avec le mandrin de serrage (54) pendant le mouvement de rotation du mandrin de serrage (54), et pour permettre, pendant le mouvement de rotation du mandrin de serrage (54), un mouvement relatif entre le mandrin de serrage (54) et la pièce (40).

3. Machine (10) selon la revendication 1 ou 2, **caractérisée en ce que** l'unité d'aspiration (140) génère, au niveau de la surface d'appui (56), une dépression destinée à assurer l'entraînement en rotation de la pièce (40) par le mandrin de serrage (54) en rotation.

4. Machine (10) selon la revendication 1, **caractérisée en ce qu'**une pluralité d'évidements (110) est formée dans le contour d'aspiration (114).

5. Machine (10) selon la revendication 4, **caractérisée en ce que** les évidements (110) sont répartis autour de l'axe longitudinal (52).

6. Machine (10) selon la revendication 5, **caractérisée en ce que** les évidements (110) sont répartis de manière circulaire autour de l'axe longitudinal (52).

7. Machine (10) selon l'une quelconque des revendications 4 à 6, **caractérisée en ce que** les évidements (110) sont réalisés sous forme de rainures en segments d'anneau aménagées sur le côté frontal.

8. Machine (10) selon l'une quelconque des revendications 1 à 7, **caractérisée en ce que** la machine (10) est conçue de telle sorte que, pendant l'usinage de la pièce (40), l'au moins un évidement (110) est adapté aux dimensions de la surface frontale (120) de la pièce (40) ainsi qu'à un décalage excentrique choisi entre le mandrin de serrage (54) et la pièce (40).

9. Machine (10) selon l'une quelconque des revendications 1 à 8, **caractérisée en ce que** la surface d'appui (56) est conçue de manière interchangeable.

10. Machine (10) selon l'une quelconque des revendications 1 à 9, **caractérisée en ce que** l'unité d'appui (60) comporte deux patins d'appui (62, 64), qui sont disposés sur le pourtour de la pièce de manière décalée l'un par rapport à l'autre dans une direction circonférentielle.

11. Procédé de rectification de pièces (40) de type annulaire à paroi mince, en particulier de bagues à paroi mince, comprenant les étapes suivantes :
- la fourniture d'une machine (10), avec
- un dispositif de serrage (50), qui comporte un mandrin de serrage (54) pouvant tourner autour d'un axe longitudinal (52), lequel met à disposition une surface d'appui (56) pour une pièce (40) de type annulaire à paroi mince,
- une unité d'appui (60) comprenant au moins un patin d'appui (62, 64), qui est configurée pour soutenir la pièce (40) dans une position excentrée par rapport à l'axe longitudinal (52), et
- au moins une broche de rectification (18), sur laquelle un outil de rectification (80, 84) destiné à l'usinage de la pièce (40) peut être reçu,
un contour d'aspiration (114) étant formé sur la surface d'appui (56), dans lequel est disposé au moins un évidement (110), qui peut être couplé à une unité d'aspiration (140) pour la génération d'une force d'aspiration,
le contour d'aspiration (114) étant dimensionné de telle sorte que la surface frontale (120) de la pièce (40) recouvre le contour d'aspiration (114) pendant l'usinage, et
la surface d'appui (56) étant conçue de telle sorte que la pièce (40) vient en appui par sa surface frontale (120) sur la surface d'appui (56) pendant l'usinage et est maintenue de manière excentrée sur le mandrin de serrage (54) en raison de la force d'aspiration,
- l'amenée de la pièce (40) vers la surface d'appui (56) du dispositif de serrage (50),
- le positionnement de la pièce (40) dans une position excentrée par rapport à l'axe longitudinal (52) du mandrin de serrage (54) du dispositif de serrage (50),
- la mise en fonctionnement de l'unité d'aspiration (140) pour fournir une dépression via au moins un évidement (110) au niveau de la surface d'appui (56) du mandrin de serrage (54), et
- l'usinage de la pièce (40) au moyen de l'outil de rectification (80, 84), comprenant
- la génération d'une rotation relative entre la pièce (40) reçue sur le mandrin de serrage (54) et l'unité d'appui (60), et
- l'entraînement de l'outil de rectification (80, 84) afin de générer un mouvement relatif entre la pièce (40) et l'outil de rectification (80, 84),
la pièce (40) étant soutenue par l'unité d'appui (60), de sorte qu'en raison de l'excentricité, un mouvement relatif s'établit entre la pièce (40) et le mandrin de serrage (54).

12. Procédé selon la revendication 11, comprenant un usinage intérieur et un usinage extérieur de la pièce (40) reçue par sa surface frontale sur la surface d'appui (56).

13. Utilisation d'une machine (10) selon l'une quelconque des revendications 1 à 10 pour le rectification de pièces (40) en matériaux non magnétiques, en particulier pour le rectification de pièces en céramique.

14. Utilisation selon la revendication 13 pour la fabrication de bagues de roulement en céramique.
